# EUROPEAN PATENT APPLICATION

(11) **EP 4 675 828 A1**
(43) Date of publication of application: **07.01.2026**
(21) Application number: 24762909.0
(22) Date of filing: 23.01.2024
(51) Int. Cl.: H01M 50/503, H01M 50/593

(54) **ADAPTER STRUCTURE, BATTERY PACK AND VEHICLE**

(30) Priority: 28.02.2023 CN 202320447358 U
(71) Applicant: BYD Company Limited, Shenzhen, Guangdong 518118 (CN)
(72) Inventor: LIAO, Zhengyuan, Shenzhen, Guangdong 518118 (CN); CHEN, Miaoqing, Shenzhen, Guangdong 518118 (CN); LIU, Xuelong, Shenzhen, Guangdong 518118 (CN); JIANG, Shengtian, Shenzhen, Guangdong 518118 (CN); WANG, Xiaolong, Shenzhen, Guangdong 518118 (CN)
(74) Representative: Mathys & Squire
(86) International application number: PCT/CN2024/073728
(87) International publication number: WO 2024/179226

(57) **Abstract**

An adapter structure, a battery pack and a vehicle. The adapter structure is applied to the battery pack, and comprises a first adapter, a second adapter and an insulating bracket, wherein the first adapter comprises a first bending structure, which is electrically connected between a first output pole of a battery cell assembly and a power distribution box; the second adapter is spaced apart from the first adapter; the second adapter comprises a second bending structure, which is electrically connected between a second output pole of the battery cell assembly and the power distribution box; and the first bending structure and the second bending structure can pass through the insulating bracket, such that the first adapter and the second adapter are insulated from each other.

## Description

### CROSS-REFERENCE TO RELATED APPLICATIONS

The present disclosure claims priority to Chinese Patent Application filed with application number of 202320447358.3, the title of "Adapting structure, battery pack and vehicle", which was filed on February 28, 2023, and the whole content of the Chinese patent application is incorporated in the present disclosure by reference.

### FIELD

The present disclosure relates to the technical field of power battery packs, in particular to an adapter structure, a battery pack and a vehicle.

### BACKGROUND

In the related art, a power battery pack includes a housing and a battery module disposed in the housing. The battery module is formed by stacking a plurality of battery cells in series. An output pole of the battery cell needs to be electrically connected to a power distribution box.

However, the output pole of the battery cell is usually lower than the power distribution box in the Z direction, and the output pole of the battery cell is usually protected by a protective cover to avoid foreign objects from falling on the output pole and causing a short circuit. In addition, therefore, the wire harnesses connecting the power distribution box and the output pole of the battery cell are difficult to route, resulting in inconvenience in connecting the output pole of the battery cell and the power distribution box.

### SUMMARY

The purpose of the present disclosure is to provide an adapter structure, a battery pack and a vehicle to solve the technical problem of inconvenience in connecting the output pole of a battery cell and a power distribution box.

In order to achieve the above purpose, the present disclosure provides an adapter structure applied to a battery pack, including: a first adapter, comprising a first bending structure electrically connected between a first output pole of a battery cell assembly and a power distribution box; a second adapter, spaced apart from the first adapter, and the second adapter comprising a second bending structure electrically connected between a second output pole of the battery cell assembly and the power distribution box; and an insulating bracket, the first bending structure and the second bending structure being capable of passing through the insulating bracket so as to insulate the first adapter from the second adapter.

In some of the embodiments, the insulating bracket includes a column, a first cantilever and a second cantilever extending outwardly from a peripheral surface of the column, and a cross beam connected to a top end of the column, the first cantilever and the second cantilever extending in opposite directions, the first cantilever extending into the first bending structure so that the first bending structure passes between the first cantilever and the cross beam, and the second cantilever extending into the second bending structure so that the second bending structure passes between the second cantilever and the cross beam.

In some of the embodiments, the first adapter includes: a first battery cell adapter plate extending in a vertical direction and arranged on a side of the insulating bracket facing the battery cell assembly so as to be electrically connected to the first output pole, a first power distribution box adapter plate extending in parallel with the first battery cell adapter plate and spaced apart from it, and arranged on a side of the insulating bracket facing the power distribution box so as to be electrically connected to the power distribution box, and a first connecting plate connected between the first battery cell adapter plate and the first power distribution box adapter plate; wherein the first battery cell adapter plate, the first connecting plate and the first power distribution box adapter plate are arranged in a circumferential manner to constitute the first bending structure.

In some of the embodiments, the adapter structure further includes a first electrode connecting plate electrically connected between a side of the first battery cell adapter plate facing the battery cell assembly and the first output pole.

In some of the embodiments, the second adapter includes: a second battery cell adapter plate extending in a vertical direction and arranged on a side of the insulating bracket facing the battery cell assembly so as to be electrically connected to the second output pole, a second power distribution box adapter plate extending in parallel with the second battery cell adapter plate and spaced apart from it, and arranged on a side of the insulating bracket facing the power distribution box so as to be electrically connected to the power distribution box, and a second connecting plate connected between the second battery cell adapter plate and the second power distribution box adapter plate; wherein the second battery cell adapter plate, the second connecting piece and the second power distribution box adapter plate are arranged in a circumferential manner to constitute the second bending structure.

In some of the embodiments, the adapter structure further includes a second electrode connecting plate electrically connected between a side of the second battery cell adapter plate facing the battery cell assembly and the second output pole.

In some of the embodiments, the insulating bracket is embedded in an avoidance opening corresponding to an end of a middle beam on a protection cover at an end of the battery cell assembly. A buckle protruding towards the middle beam is arranged on a side surface of the column facing the battery cell assembly, and the buckle is used to clamp and fix to the middle beam.

In some of the embodiments, a plug-in boss protruding towards the middle beam is arranged on a side surface of the column facing the battery cell assembly, wherein the plug-in boss is used to insert into the middle beam, and an end of the plug-in boss is formed with a guide slope so that the plug-in boss can be in an interference fit with the middle beam.

In some of the embodiments, an insulating boss protruding towards the power distribution box is arranged on a side surface of the column facing the power distribution box so as to space the first adapter and the second adapter apart.

In some of the embodiments, the insulating boss is formed with a first limiting boss protruding towards and inserted into the first adapter, and a second limiting boss protruding towards and inserted into the second adapter.

In some of the embodiments, a first routing groove is formed between the insulating boss and a bottom end of the column for a sampling wire harness to pass through.

In some of the embodiments, two splayed support legs are arranged on a bottom end of the column, wherein the two support legs are used for being supported on a plastic bracket, and a wire through hole is formed between the two support legs and the plastic bracket so as to allow a power wire harness to pass through.

In some of the embodiments, an upper surface of the cross beam is formed with a second routing groove allowing a low-voltage wire harness to pass through.

In some of the embodiments, a position on the first adapter 1 for connecting to the first output pole in the vertical direction is higher than a position on the second adapter 2 for connecting to the second output pole, and an upper surface of the first cantilever is higher than an upper surface of the second cantilever, a third limiting boss protruding towards the first cantilever is formed on a lower surface of the cross beam corresponding to the position above the first cantilever, so that the first adapter is clamped between the third limiting boss and the first cantilever, the second routing groove is arranged on the cross beam at a position corresponding to the position above the second cantilever, so that the second transfer piece is clamped between the bottom of the second routing groove and the second cantilever.

In some of the embodiments, a side of the cross beam facing the power distribution box is formed with a flange extending towards the power distribution box, wherein the flange is configured to overlap an upper surface of the power distribution box.

In some of the embodiments, a side of the cross beam facing the battery cell assembly is formed with a clearance groove for avoiding a liquid injection hole of the battery cell assembly.

On the basis of the above technical solution, the present disclosure also provides a battery pack, including a battery cell assembly and a power distribution box arranged at one end of the battery cell assembly, and further including the adapter structure according to the above technical solution.

On the basis of the above technical solution, the present disclosure also provides a vehicle, including the battery pack according to the above technical solution.

According to the above technical solution, the adapter structure provided by the present disclosure includes a first adapter, a second adapter and an insulating bracket, the first bending structure of the first adapter and the second bending structure of the second adapter are kept insulated from each other by the insulating bracket. In addition, the first bending structure and the second bending structure can not only electrically connect the first output pole and the second output pole located at a lower position in the vertical direction to the power distribution box located at a higher position, but also can reduce the space occupied by the first adapter and the second adapter in the battery pack, thereby improving the space utilization rate inside the battery pack. Therefore, the adapter structure provided by the present disclosure can simplify the relevant structure for electrical connections between the output pole of the battery cell assembly and the power distribution box, making it easy to electrically connect the output pole of the battery cell assembly to the power distribution box. The battery pack provided by the present disclosure has the same technical effects as the adapter structure in the above technical solution. To avoid unnecessary repetition, it will not be elaborated upon here. The vehicle provided by the present disclosure has the same technical effects as the battery pack in the above technical solution. To avoid unnecessary repetition, it will not be elaborated upon here.

Other features and advantages of the present disclosure will be described in detail in the following specific embodiments section.

### BRIEF DESCRIPTION OF THE DRAWINGS

The drawings are provided to further understand the present disclosure and form a part of the specification. Together with the specific embodiments described below, they are used to explain the present disclosure, but do not constitute a limitation on the present disclosure. In the drawings:
FIG. 1 is an exploded view of a battery pack in the specific embodiment of the present disclosure;
FIG. 2 is an assembly schematic diagram of the adapter structure and the protection cover in the specific embodiment of the present disclosure;
FIG. 3 is a structural schematic diagram of a side of the adapter structure facing the battery cell assembly in the specific embodiment of the present disclosure;
FIG. 4 is a structural schematic diagram of a side of the adapter structure facing the power distribution box in the specific embodiment of the present disclosure;
FIG. 5 is a schematic diagram of the sampling wire harness passing through the first routing groove in the specific embodiment of the present disclosure;
FIG. 6 is a schematic diagram of the cooperation between the support leg of the insulating bracket and the plastic bracket in the specific embodiment of the present disclosure;
FIG. 7 is a schematic diagram of the low-voltage wire harness passing through the second routing groove in the specific embodiment of the present disclosure;
FIG. 8 is a schematic diagram of the cooperation between the clearance groove of the insulating bracket and the liquid injection hole in the specific embodiment of the present disclosure;
FIG. 9 is a schematic diagram of a vehicle in the specific embodiment of the present disclosure.

### REFERENCE NUMERALS

1-first adapter, 10-first bending structure, 11- first battery cell adapter plate, 12-first power distribution box adapter plate, 13- first connecting plate,
2- second adapter, 20- second bending structure, 21- second battery cell adapter plate, 22- second power distribution box adapter plate, 23- second connecting plate,
3- insulating bracket, 30- column, 301- insulating boss, 302- buckle, 303- plug-in boss, 304- first limiting boss, 305- second limiting boss, 306- first routing groove ,307- guide slope, 31- first cantilever, 32- second cantilever, 33- cross beam, 331- second routing groove, 332-third limiting boss, 333- flange, 334- clearance groove, 34- support leg, 35- wire through hole,
4- first electrode connecting plate,
5- second electrode connecting plate,
6- battery cell assembly, 61- liquid injection hole,
7- power distribution box,
8-protection cover, 81- avoidance opening, 82- plastic bracket,
9- middle beam,
101- sampling wire harness, 102- low-voltage wire harness.

### DETAILED DESCRIPTION

The specific embodiments of the present disclosure are described in detail below in conjunction with the accompanying drawings. It will be understood that the specific embodiments described herein are only for illustration and explanation of this disclosure, and are not intended to limit the present disclosure.

In the present disclosure, unless otherwise specified, directional words such as "up" and "down" usually refer to the upper and lower positions of the adapter structure when assembled in the battery pack in normal operating state, while "inside" and "outside" refer to the inner and outer positions relative to the contour of the corresponding component itself. In addition, the terms "first", "second", etc., used in the present disclosure are intended to distinguish one element from another and do not imply any order or significance.

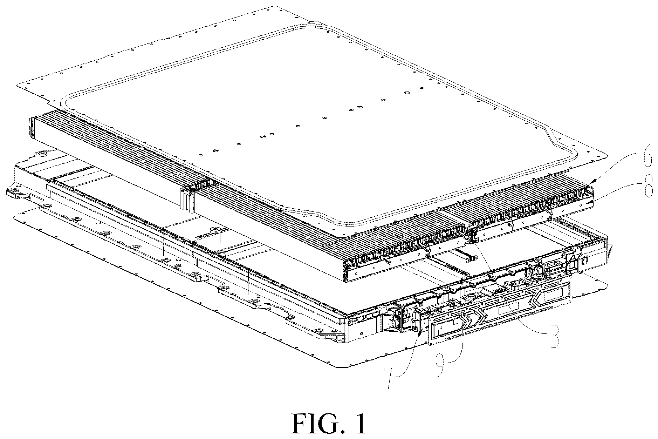

According to the specific embodiments of the present disclosure, an adapter structure is provided for a battery pack, specifically for electrically connecting the output pole of the battery cell assembly 6 in the battery pack to the power distribution box 7. The battery cell assembly 6 usually has a total positive output pole and a total negative output pole. In the specific embodiments of the present disclosure, one of the total positive output pole and the total negative output pole is named the first output pole, and the other is named the second output pole. Referring to FIG. 1 to FIG. 4, the adapter structure may include a first adapter 1, a second adapter 2, and an insulating bracket 3. The first adapter 1 may include a first bending structure 10 electrically connected between the first output pole (not shown) of the battery cell assembly 6 and the power distribution box 7. Through the first bending structure 10, it is convenient to electrically connect the first output pole and the power distribution box 7, which have a height difference in the vertical direction. The second adapter 2 may be spaced apart from the first adapter 1 to maintain insulation with the first adapter 1. The second adapter 2 may include a second output pole (not shown) electrically connected between the second output pole (not shown) of the battery cell assembly 6 and the power distribution box 7. Through this second bending structure 20, it is convenient to electrically connect the second output pole and the power distribution box 7, which have a height difference in the vertical direction. The first bending structure 10 and the second bending structure 20 can pass through the insulating bracket 3 to insulate the first adapter 1 and the second adapter 2 from each other.

Through the above technical solution, the adapter structure provided by the present disclosure includes a first adapter 1, a second adapter 2, and an insulating bracket 3. The first bending structure 10 of the first adapter 1 and the second bending structure 20 of the second adapter 2 are kept insulated from each other by the insulating bracket 3. In addition, the first bending structure 10 and the second bending structure 20 can not only electrically connect the first output pole and the second output pole located at a lower position in the vertical direction to the power distribution box located at a higher position, but also can reduce the space occupied by the first adapter 1 and the second adapter 2 in the battery pack, thereby improving the space utilization rate inside the battery pack. Therefore, the adapter structure provided by the present disclosure can simplify the relevant structure for electrical connection between the output pole of the battery cell assembly 6 and the power distribution box 7, making it easy to electrically connect the output pole of the battery cell assembly 6 to the power distribution box 7.

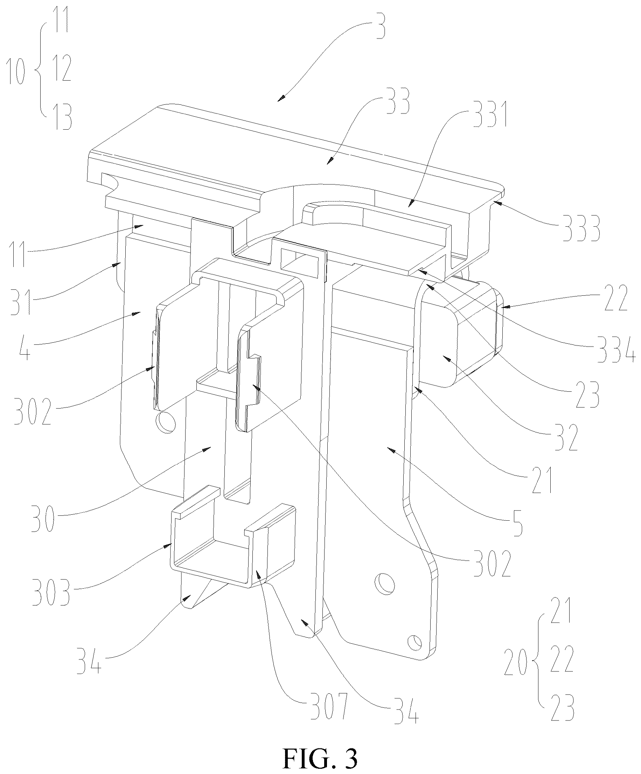

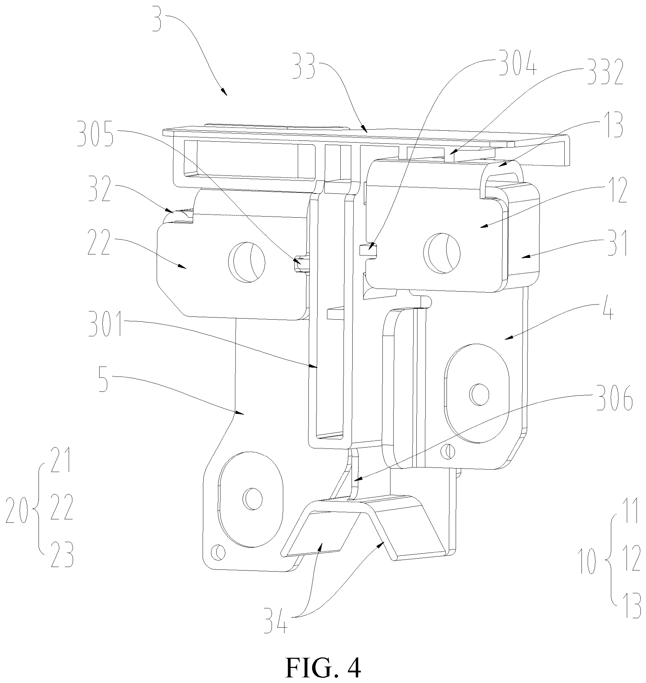

In order to maintain mutual insulation between the first adapter 1 and the second adapter 2 through the insulating bracket 3, as shown in FIG. 3 and FIG. 4, the insulating bracket 3 may include a column 30, a first cantilever 31 and a second cantilever 32 extending outwardly from a peripheral surface of the column 30, and a cross beam 33 connected to the top end of the column 30. The first cantilever 31 can extend into the first bending structure 10 so that the first bending structure 10 passes between the first cantilever 31 and the cross beam 33, that is, the part of the first bending structure 10 passing through the insulating bracket 3 can be covered by the first cantilever 31 and the cross beam 33. The second cantilever 32 can extend into the second bending structure 20 so that the second bending structure 20 passes between the second cantilever 32 and the cross beam 33, that is, the part of the second bending structure 20 passing through the insulating bracket 3 can be covered by the second cantilever 32 and the cross beam 33. The first cantilever 31 and the second cantilever 32 can extend in opposite directions, so that the first bending structure 10 and the second bending structure 20 can be separated by the column 30, thereby keeping the first adapter 1 and the second adapter 2 insulated.

In order to form the first bending structure 10, as shown in FIG. 3 and FIG. 4, the first adapter 1 may include a first battery cell adapter plate 11, a first power distribution box adapter plate 12, and a first connecting plate 13. The first battery cell adapter plate 11 may extend in the vertical direction and be arranged on a side of the insulating bracket 3 facing the battery cell assembly 6 to be able to electrically connect to the first output pole. The first power distribution box adapter plate 12 may extend in parallel with the first battery cell adapter plate 11 and be spaced apart from it, and may be arranged on a side of the insulating bracket 3 facing the power distribution box 7 to be able to electrically connect to the power distribution box 7. The first connecting plate 13 may be connected between the first battery cell adapter plate 11 and the first power distribution box adapter plate 12. The first connecting plate 13 can extend horizontally so as to the first battery cell adapter plate 11, the first connecting plate 13 and the first distribution box adapter piece 12 arranged in a circumferential manner to constitute the first bending structure 10. The first connecting plate 13 can pass between the first cantilever 31 and the cross beam 33 and be covered by the first cantilever 31 and the cross beam 33. The first battery cell adapter plate 11 can be attached to the surface of the first cantilever 31 facing the battery cell assembly 6, and the first power distribution box adapter plate 12 can be attached to the surface of the first cantilever 31 facing the power distribution box 7, so as to make the volume and structure of the adapter structure smaller and more compact.

As shown in FIG. 3 and FIG.4, the adapter structure may further include a first electrode connecting plate 4 electrically connected between a side of the first battery cell adapter plate 11 facing the cell assembly 6 and the first output pole. The first electrode connecting plate 4 may be made of aluminum material, and the first adapter 1 may be made of copper material. The first electrode connecting plate 4 and the first battery cell adapter plate 11 may be permanently joined through welding.

In order to form the second bending structure 20, as shown in FIG. 3 and FIG. 4, the second adapter 2 may include a second battery cell adapter plate 21, a second power distribution box adapter plate 22, and a second connecting plate 23. The second battery cell adapter plate 21 may extend in the vertical direction and be arranged on a side of the insulating bracket 3 facing the battery cell assembly 6 to be able to electrically connect to the second output pole. The second power distribution box adapter plate 22 may extend in parallel with the second battery cell adapter plate 21 and be spaced apart from it, and may be arranged on a side of the insulating bracket 3 facing the power distribution box 7 to be able to electrically connect to the power distribution box 7. The second connecting plate 23 may be connected between the second battery cell adapter plate 21 and the second power distribution box adapter plate 22. The second connecting plate 23 can extend horizontally so as to the second battery cell adapter plate 21, the second connecting plate 23 and the second distribution box adapter piece 22 arranged in a circumferential manner to constitute the second bending structure 20. The second connecting plate 23 can pass between the second cantilever 32 and the cross beam 33 and be covered by the second cantilever 32 and the cross beam 33. The second battery cell adapter plate 21 can be attached to the surface of the second cantilever 32 facing the battery cell assembly 6, and the second power distribution box adapter plate 22 can be attached to the surface of the second cantilever 32 facing the power distribution box 7, so as to make the volume and structure of the adapter structure smaller and more compact.

As shown in FIG. 3 and FIG. 4, the adapter structure may further include a second electrode connecting plate 5 electrically connected between a side of the second battery cell adapter plate 21 facing the cell assembly 6 and the second output pole. The second electrode connecting plate 5 may be made of aluminum material, and the second adapter 2 may be made of copper material. The second electrode connecting plate 5 and the second battery cell adapter plate 21 may be permanently joined through welding.

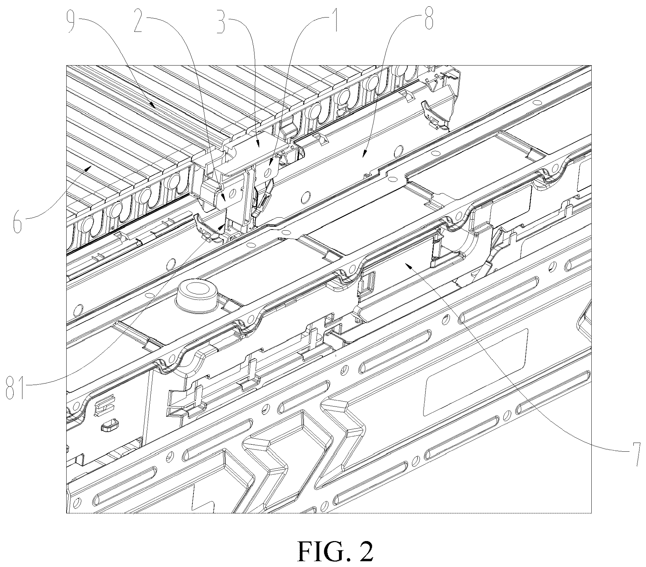

As shown in FIG. 1 and FIG. 2, a protection cover 8 for protecting the electrodes of the battery cell assembly 6 is usually arranged on the end of the battery cell assembly 6. The protection cover 8 is located between the battery cell assembly 6 and the power distribution box 7. The insulation bracket 3 can be embedded in an avoidance opening 81 corresponding to an end of the center beam 9 on the protection cover 8. In order to avoid displacement of the insulation bracket 3, as shown in FIG. 3, a buckle 302 protruding towards the middle beam 9 is arranged on a side surface of the column 30 facing the battery cell assembly 6. The buckle 302 can be used to clamp and fix to the middle beam 9 for easy disassembly and assembly of the insulation bracket 3.

In order to facilitate the positioning between the insulation bracket 3 and the middle beam 9, as shown in FIG. 3, a plug-in boss 303 protruding towards the middle beam 9 can be arranged on a side surface of the column 30 facing the battery cell assembly 6. The plug-in boss 303 is used to insert into the center beam 9. Specifically, a socket for inserting the plug-in boss 303 can be arranged on an end face of the middle beam 9. In order to improve the reliability of the connection between the insulation bracket 3 and the middle beam 9, an end of the plug-in boss 303 can form a guiding slope 307, so that the plug-in boss 303 can be in an interference fit with socket of the center beam 9.

In addition, the buckle 302 and the plug-in boss 303 can further improve the insulation reliability between the first battery cell adapter plate 11 and the second battery cell adapter plate 21.

Correspondingly, as shown in FIG. 4, an insulating boss 301 protruding towards the power distribution box 7 is arranged on a side surface of the column 30 facing the power distribution box 7 so as to space the first adapter 1 and the second adapter 2 apart, thereby further improving the insulation reliability between the first power distribution box adapter plate 12 and the second power distribution box adapter plate 22.

As shown in FIG. 4, the insulating boss 301 can be formed with a first limiting boss 304 protruding towards and inserted into the first adapter 1, and a second limiting boss 305 protruding towards and inserted into the second adapter 2, so as to prevent the first adapter 1 and the second adapter 2 from easily shifting when connected to the power distribution box 7, and improve the assembly accuracy and connection reliability between the first adapter 1 and the second adapter 2 and the power distribution box 7.

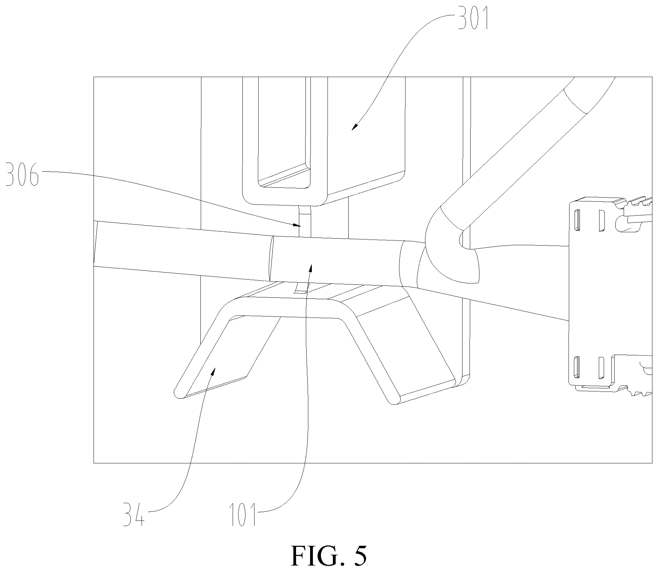

As shown in FIG. 5, a first routing groove 306 can be formed between the insulation boss 301 and a bottom end of the column 30 for a sampling wire harness 101 to pass through. Specifically, the insulating boss 301 can form a first routing groove 306 between the following two support legs 34 to simplify the routing of the sampling wire harness, reduce the length of the sampling wire harness, and improve the internal space utilization of the battery pack.

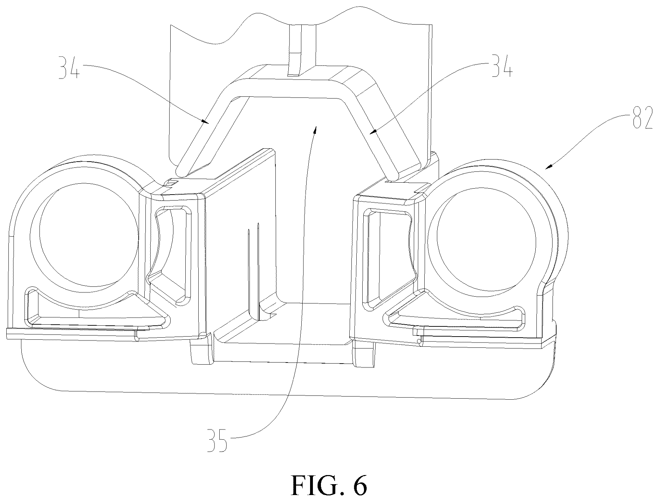

A plastic bracket 82 is usually arranged in the avoidance opening 81 of the protection cover 8. In order to facilitate the assembly between the insulation bracket 3 and the plastic bracket 82, as shown in FIG. 6, two splayed support legs 34 are arranged on a bottom end of the column. The two support legs 34 are used for being supported on the plastic bracket 82 to meet the strength requirements after assembly of the insulation bracket 3 and the plastic bracket 82. A wire through hole 35 can also be formed between the two support legs 34 and the plastic bracket 82, through which the drive power lead-out harness (not shown) can pass, so as to simplify routing and improve the space utilization inside the battery pack.

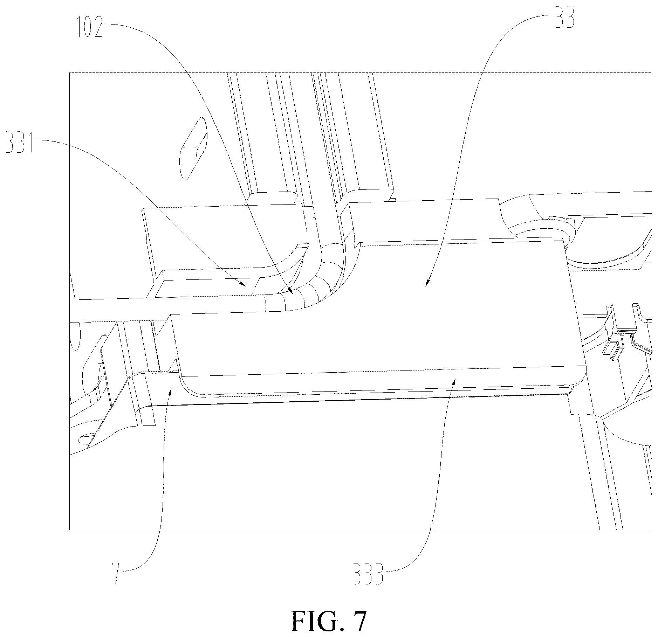

In addition, as shown in FIG. 3 and FIG. 7, an upper surface of the cross beam 33 is formed with a second routing groove 331 allowing a low-voltage wire harness 102 to pass through, so that the low-voltage wire harness 102 can reach the routing channel of the middle beam 9 through the insulation bracket 3 via the shortest path.

In general, the first output pole and the second output pole are located on opposite sides of the middle beam 9, with a vertical height difference between them. In the specific embodiments of the present disclosure, the output pole with a higher position is used as the first output pole, and the output pole with a lower position is used as the second output pole. Correspondingly, a position on the first adapter 1 for connecting to the first output pole in the vertical direction is higher than a position on the second adapter 2 for connecting to the second output pole. Therefore, an upper surface of the first cantilever 31 can be higher than the upper surface of the second cantilever 32. That is to say, the distance between the upper surface of the first cantilever 31 and the cross beam 33 is smaller than that between the upper surface of the second cantilever 32 and the cross beam 33.

As shown in FIG. 3 and FIG. 4, in order to make the structure of the insulation bracket 3 more compact, the second routing groove 331 can be arranged on the cross beam 33 at a position corresponding to the position above the second cantilever 32, so that the second adapter 2 is clamped between the bottom of the second routing groove 331 and the second cantilever 32. That is to say, the space between the second cantilever 32 and the cross beam 33 can be used to arrange the second routing groove 331, and the bottom of the second routing groove 331 can also serve as a limit for the second adapter 2. Correspondingly, in order to limit the first adapter 1, a third limiting boss 332 protruding towards the first cantilever 31 can be formed on a lower surface of the cross beam 33 corresponding to the position above the first cantilever 31, so that the first adapter 1 is clamped between the third limiting boss 332 and the first cantilever 31. The third limiting boss 332 and the second routing groove 331 can cooperate with the first limiting boss 304 and the second limiting boss 305, further improving the assembly accuracy and connection reliability between the first adapter 1 and the second adapter 2 and the power distribution box 7.

In addition, as shown in FIG. 3 and FIG. 7, a side of the cross beam 33 facing the power distribution box 7 can be formed with a flange 333 extending towards the power distribution box 7. The flange 333 is used to overlap an upper surface of the power distribution box 7 to further improve the positioning accuracy and connection stability between the insulation bracket 3 and the power distribution box 7.

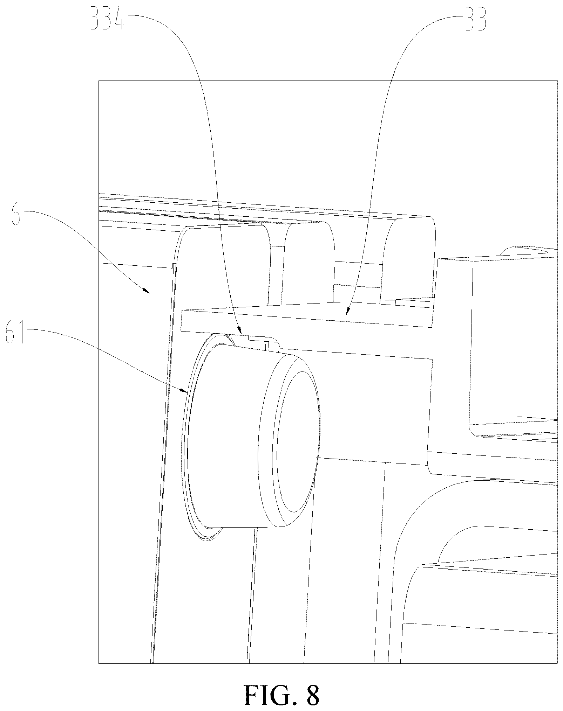

In addition, as shown in FIG. 3 and FIG. 8, a side of the cross beam 33 facing the battery cell assembly 6 is formed with a clearance groove 334 for avoiding a liquid injection hole 61 of the battery cell assembly 6. This clearance groove 334 can not only provide a space for the liquid injection hole 61, but also protect the liquid injection hole 61.

On the basis of the above technical solution, the present disclosure also provides a battery pack, as shown in FIG. 1 and FIG. 2. The battery pack may include a battery cell assembly 6, a middle beam 9 extending parallel to the battery cell assembly 6, a power distribution box 7 arranged at one end of the battery cell assembly 6, and a protection cover 8 arranged between the battery cell assembly 6 and the power distribution box 7. A clearance opening 81 is arranged on the protection cover 8 corresponding to an end of the middle beam 9. The battery pack may also include the adapter structure in the above technical solution, and the insulation bracket 3 is embedded in the clearance opening 81.

Through the above technical solution, the battery pack provided in the present disclosure has the same technical effects as the adapter structure in the above technical solution. To avoid unnecessary repetition, it will not be elaborated upon here.

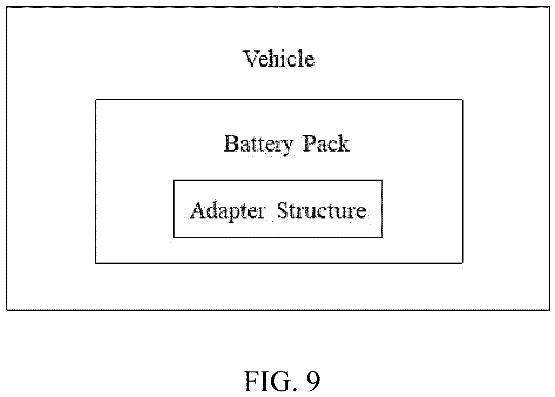

On the basis of the above technical solution, the present disclosure also provides a vehicle, as shown in FIG. 9, which may further include the battery pack in the above technical solution.

Through the above technical solution, the vehicle provided by the present disclosure has the same technical effects as the battery pack in the above technical solution. To avoid unnecessary repetition, it will not be elaborated upon here.

The preferred embodiments of the present disclosure have been described in detail above in conjunction with the accompanying drawings. However, the present disclosure is not limited to the specific details of the embodiments described above. Within the scope of the technical concept of the present disclosure, various simple modifications can be made to the technical solution of the present disclosure, all of which fall within the scope of protection of the present disclosure.

Furthermore, it should be noted that the specific technical features described in the above embodiments can be combined in any suitable way without contradiction. To avoid unnecessary repetition, the present disclosure will not separately explain various possible combinations.

In addition, various different embodiments disclosed in the present disclosure can also be combined arbitrarily, as long as they do not violate the ideas disclosed in the present disclosure, they should also be considered as the content disclosed in the present disclosure.

## Claims

1. An adapter structure, applied to a battery pack, comprising:
a first adapter (1), comprising a first bending structure (10) electrically connected between a first output pole of a battery cell assembly (6) and a power distribution box (7),
a second adapter, (2) spaced apart from the first adapter (1), and the second adapter comprising a second bending structure (20) electrically connected between a second output pole of the battery cell assembly (6) and the power distribution box (7), and
an insulating bracket (3), the first bending structure (10) and the second bending structure (20) being capable of passing through the insulating bracket (3) so as to insulate the first adapter (1) from the second adapter (2).

2. The adapter structure according to claim 1, wherein the insulating bracket (3) comprises a column (30), a first cantilever (31), a second cantilever (32) and a cross beam (33), the first cantilever (31) and the second cantilever (32) extending outwardly from a peripheral surface of the column (30), the cross beam (33) being connected to a top end of the column (30), the first cantilever (31) and the second cantilever (32) extending in opposite directions,
the first cantilever (31) extending into the first bending structure (10) so that the first bending structure (10) passes between the first cantilever (31) and the cross beam (33), and the second cantilever (32) extending into the second bending structure (20) so that the second bending structure (20) passes between the second cantilever (32) and the cross beam (33).

3. The adapter structure according to claim 1 or 2, wherein the first adapter (1) comprises:
a first battery cell adapter plate (11) extending in a vertical direction and arranged on a side of the insulating bracket (3) facing the battery cell assembly (6) so as to be electrically connected to the first output pole,
a first power distribution box adapter plate (12) extending in parallel with the first battery cell adapter plate (11) and spaced apart from each other, and arranged on a side of the insulating bracket (3) facing the power distribution box (7) so as to be electrically connected to the power distribution box (7), and
a first connecting plate (13) connected between the first battery cell adapter plate (11) and the first power distribution box adapter plate (12);
wherein the first battery cell adapter plate (11), the first connecting plate (13) and the first power distribution box adapter plate (12) are arranged in a circumferential manner to constitute the first bending structure (10).

4. The adapter structure according to claim 3, wherein the adapter structure further comprises a first electrode connecting plate (4) electrically connected between a side of the first battery cell adapter plate (11) facing the battery cell assembly (6) and the first output pole.

5. The adapter structure according to any one of claim 1 to 4, wherein the second adapter (2) comprises:
a second battery cell adapter plate (21) extending in a vertical direction and arranged on a side of the insulating bracket (3) facing the battery cell assembly (6) so as to be electrically connected to the second output pole,
a second power distribution box adapter plate (22) extending in parallel with the second battery cell adapter plate (21) and spaced apart from each other, and arranged on a side of the insulating bracket (3) facing the power distribution box (7) so as to be electrically connected to the power distribution box (7), and
a second connecting plate (23) connected between the second battery cell adapter plate (21) and the second power distribution box adapter plate (22);
wherein the second battery cell adapter plate (21), the second connecting plate (23) and the second power distribution box adapter plate (22) are arranged in a circumferential manner to constitute the second bending structure (20).

6. The adapter structure according to claim 5, wherein the adapter structure further comprises a second electrode connecting plate (5) electrically connected between a side of the second battery cell adapter plate (21) facing the battery cell assembly (6) and the second output pole.

7. The adapter structure according to any one of claim 2 to 6, wherein the insulating bracket (3) is embedded in a avoidance opening (81) corresponding to an end of a middle beam (9) on a protection cover (8) at an end of the battery cell assembly (6), and a buckle (302) protruding towards the middle beam (9) is arranged on a side surface of the column (30) facing the battery cell assembly (6), the buckle (302) being used to clamp and fix to the middle beam (9).

8. The adapter structure according to claim 7, wherein a plug-in boss (303) protruding towards the middle beam (9) is arranged on a side surface of the column (30) facing the battery cell assembly (6), the plug-in boss (303) being used to insert into the middle beam (9), and an end of the plug-in boss (303) being formed with a guide slope (307) so that the plug-in boss (303) can be in an interference fit with the middle beam (9).

9. The adapter structure according to any one of claim 2 to 8, wherein an insulating boss (301) protruding towards the power distribution box (7) is arranged on a side surface of the column (30) facing the power distribution box (7) so as to space the first adapter (1) and the second adapter (2) apart.

10. The adapter structure according to claim 9, wherein the insulating boss (301) is formed with a first limiting boss (304) protruding towards and inserted into the first adapter (1), and a second limiting boss (305) protruding towards and inserted into the second adapter (2).

11. The adapter structure according to claim 9 or 10, wherein a first routing groove (306) is formed between the insulating boss (301) and a bottom end of the column (30) for a sampling wire harness (101) to pass through.

12. The adapter structure according to any one of claim 2 to 11, wherein two splayed support legs (34) is arranged on a bottom end of the column (30), the two support legs (34) being used for being supported on a plastic bracket (82), and a wire through hole (35) being formed between the two support legs (34) and the plastic bracket (82) so as to allow a power wire harness to pass through.

13. The adapter structure according to any one of claim 2 to 12, wherein an upper surface of the cross beam (33) is formed with a second routing groove (331) allowing a low-voltage wire harness (102) to pass through.

14. The adapter structure according to claim 13, wherein a position on the first adapter (1) for connecting to the first output pole in the vertical direction is higher than a position on the second adapter (2) for connecting to the second output pole, and an upper surface of the first cantilever (31) is higher than an upper surface of the second cantilever (32),
a third limiting boss (332) protruding towards the first cantilever (31) is formed on a lower surface of the cross beam (33) corresponding to the position above the first cantilever (31), so that the first adapter (1) is clamped between the third limiting boss (332) and the first cantilever (31),
the second routing groove (331) is arranged on the cross beam (33) at a position corresponding to the position above the second cantilever (32), so that the second transfer piece (2) is clamped between the bottom of the second routing groove (331) and the second cantilever (32).

15. The adapter structure according to any one of claims 2 to 14, wherein a side of the cross beam (33) facing the power distribution box (7) is formed with a flange (333) extending towards the power distribution box (7), the flange (333) being configured to overlap an upper surface of the power distribution box (7).

16. The adapter structure according to any one of claims 2 to 14, wherein a side of the cross beam (33) facing the battery cell assembly (6) is formed with a clearance groove (334) for avoiding a liquid injection hole (61) of the battery cell assembly (6).

17. A battery pack, comprising a battery cell assembly (6) and a power distribution box (7) arranged at one end of the battery cell assembly (6), and further comprising the adapter structure according to any one of claims 1 to 16.

18. A vehicle, comprising the battery pack according to claim 17.
